(19) Europäisches Patentamt
European Patent Office
Office européen des brevets

(11) EP 2 985 336 B1

(12) EUROPÄISCHE PATENTSCHRIFT

(45) Veröffentlichungstag und Bekanntmachung des Hinweises auf die Patenterteilung:
**12.06.2019 Patentblatt 2019/24**

(51) Int Cl.:
***C09K 21/12*** (2006.01) ***C08K 5/5313*** (2006.01)

(21) Anmeldenummer: **15177508.7**

(22) Anmeldetag: **20.07.2015**

# (54) FLAMMWIDRIGE POLYURETHANSCHAUMSTOFFE MIT GERINGER KERNVERFÄRBUNG

FLAME-RESISTANT POLYURETHANE FOAMS WITH LOW CORE DISCOLOURATION

MOUSSES DE POLYURETHANE ININFLAMMABLES A FAIBLE DECOLORATION DE L'AME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.08.2014 EP 14181117**

(43) Veröffentlichungstag der Anmeldung:
**17.02.2016 Patentblatt 2016/07**

(73) Patentinhaber: **LANXESS Deutschland GmbH**
**50569 Köln (DE)**

(72) Erfinder:
- **Hansel, Jan-Gerd**
**51469 Bergisch Gladbach (DE)**
- **Tebbe, Heiko**
**41539 Dormagen (DE)**

(56) Entgegenhaltungen:
**DE-A1- 2 646 218 DE-A1-102007 028 593**

- **A. KÖNIG ET AL: "Methyl-DOPO-a new flame retardant for flexible polyurethane foam", POLYMERS FOR ADVANCED TECHNOLOGIES, Bd. 22, Nr. 1, 28. Januar 2011 (2011-01-28), Seiten 5-13, XP055163084, ISSN: 1042-7147, DOI: 10.1002/pat.1728**
- **Vallo Vallo ET AL: "As stretchy as rubber but also light and springy", , 25 June 2013 (2013-06-25), XP055365718, Retrieved from the Internet: URL:https://www.basf.com/documents/corp/en/news-and-media/news-releases/2013/06/P301-13e.pdf [retrieved on 2017-04-20]**
- **Wikipedia: "Schaumstoff", , 8 May 2018 (2018-05-08), XP55479170, Retrieved from the Internet: URL:https://de.wikipedia.org/wiki/Schaumst off [retrieved on 2018-05-29]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 985 336 B1

Printed by Jouve, 75001 PARIS (FR)

## Beschreibung

Die vorliegende Erfindung betrifft flammwidrige Polyurethanschaumstoffe mit geringer Kernverfärbung, die als Flammschutzmittel phosphorhaltige Propionsäureester enthalten, sowie ein Verfahren zur Herstellung solcher Schaumstoffe und deren Verwendung.

Polyurethanschaumstoffe werden in vielen Bereichen, wie Möbel, Matratzen, Transport, Bau und technische Dämmung eingesetzt. Zur Erfüllung hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu ist bereits eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei der Verwendung fester Flammschutzmittel wie z. B. Melamin, Ammoniumpolyphosphat und Ammoniumsulfat aufgrund von Sedimentation oder Aggregation dosiertechnische Probleme auf, die vielfach technische Modifikationen der Verschäumanlagen, d. h. aufwendige Umbauten und Anpassungen notwendig machen.

Die häufig eingesetzten Chloralkylphosphate Tris(chlorethyl)phosphat, Tris(chlorisopropyl)phosphat und Tris(dichlorisopropyl)phosphat stellen zwar leicht dosierbare Flüssigkeiten dar. Von offenzelligen Polyurethanweichschaumsystemen für die Automobil-Innenausstattung wird jedoch in letzter Zeit immer häufiger gefordert, dass die gasförmigen Emissionen (Volatile Organic Compounds, VOC) und vor allem die kondensierbaren Emissionen (Fogging) aus diesen Schäumen niedrige Grenzwerte nicht überschreiten sollen. Diesen Anforderungen werden die oben genannten Flüssigkeiten aufgrund ihrer zu hohen Flüchtigkeit nicht mehr gerecht.

Unter "Fogging" versteht man die unerwünschte Kondensation von verdampften flüchtigen Bestandteilen aus der Kraftfahrzeug-Innenausstattung an Glasscheiben, insbesondere an der Windschutzscheibe. Diese Erscheinung kann nach DIN 75 201 B quantitativ beurteilt werden. Die Automobilindustrie fordert typischerweise, dass das Fogging-Kondensat nach der Methode DIN 75201 B weniger als 1 mg betragen darf.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittel bevorzugt. Auch aus anwendungstechnischen Gründen können halogenfreie Flammschutzmittel von besonderem Interesse sein. So beobachtet man z. B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Von der Automobil- und Möbelindustrie wird zunehmend der Einsatz von Flammschutzmitteln gefordert, die insbesondere in offenzelligen Polyurethanweichschaumstoffen eine möglichst geringe Kernverfärbung verursachen. Unter Kernverfärbung ("Scorch") versteht man die unerwünschte Braunfärbung in Polyurethanschaumstoffen während der Produktion, die durch thermischen und oxidativen Abbau des Polyurethanschaums in Gegenwart von Luft verursacht wird. Kernverfärbung wird vor allem bei der industriellen Produktion von großen Polyurethanschaumblöcken beobachtet, da hier aufgrund des ungünstigen Oberfläche/Volumen-Verhältnisses die Temperatur im Kern des Blocks für längere Zeit erhöht bleibt. Im Labormaßstab lässt sich die Kernverfärbung mit der Mikrowellenmethode gemäß US 4,131,660 quantitativ beurteilen. A. KÖNIG ET AL: "Methyl-DOPO-a new flame retardant for flexible polyurethane foam", POLYMERS FOR ADVANCED TECHNOLOGIES, Bd. 22, Nr. 1, 28. Januar 201, Seiten 5-13, offenbart die Verwendung von Methyl-DOPO als flammhemmende Mittel für Polyurethanschaumstoffen. DE 10 2007 028593 offenbart die Herstellung eines thermoplastischen Polyurethans mit einem hohen Fogging-Wert enthaltend dem Umsetzungsprodukt aus DOPO und Octylacrylat als Flammschutzmittel.

Flammschutzmittel können die Kernverfärbung von Polyurethanschaumstoffen erheblich verschlechtern. Ein Zusatz von Chloralkylphosphaten, wie beispielsweise Tris-(dichlor-isopropyl)phosphat, als Flammschutzmittel führt zu einer erheblichen Zunahme der Kernverfärbung. Flammschutzmittel mit geringer Kernverfärbungsneigung sind bromierte Diphenylether, Tetrabromphthalsäuredialkylester und Arylphosphate. Wenn die Kombination von geringer Kernverfärbung und Halogenfreiheit gefordert ist, sind Arylphosphate die Flammschutzmittel der Wahl. Arylphosphate wie Triphenylphosphat (vgl. z.B. EP 0 170 206 A1) oder Diphenylkresylphosphat (vgl. z.B. EP 0 308 733 B1) sind gut verfügbar und werden als wirksame Flammschutzmittel in Polyurethanschaumstoffen eingesetzt. Als gravierender Nachteil ist aber die Schädlichkeit von Triphenylphosphat für Wasserorganismen zu sehen. Dies betrifft nicht nur Triphenylphosphat selber, sondern auch viele kommerziell genutzte triphenylphosphathaltige Arylphosphatmischungen.

Des Weiteren kann es unter den Bedingungen der Polyurethansynthese oder im weiteren Produktlebenszyklus des Schaumstoffs zu minimaler Freisetzung von Phenolen kommen. Arylphosphate werden daher zu den sogenannten Phenolbildnern gezählt. Darunter werden Stoffe verstanden, die einen messbaren Gehalt an gegebenenfalls substituierten Phenolen in einem Produkt verursachen können, auch wenn bei der Herstellung des Produktes die betreffenden

Phenole selber gar nicht verwendet worden waren. Beispiele für Phenolbildner sind die Phenyl- und Alkylphenylester organischer und anorganischer Säuren. Da die Gegenwart von Phenolbildnern in verbrauchernahen Anwendungen, wie beispielsweise im Automobilbereich, aus Gründen der Produktsicherheit häufig nicht mehr akzeptiert wird, besteht ein Bedarf an gleichwertigen Ersatzstoffen.

Aufgrund steigender Anforderungen an die Produktsicherheit werden daher Alternativen für triphenylphosphathaltige Flammschutzmittel in Polyurethanschaumstoffen gesucht.

Aufgabe der vorliegenden Erfindung ist es, einen flammwidrigen Polyurethanschaumstoff zur Verfügung zu stellen, der die Nachteile der aus dem Stand der Technik bekannten flammwidrig ausgerüsteten Polyurethanschaumstoffe überwindet.

Es wurde gefunden, dass sich unter Verwendung bestimmter, phosphorhaltiger Propionsäureester flammwidrige Polyurethanschaumstoffe herstellen lassen.

Überraschenderweise lassen sich so, ohne den Einsatz von halogenhaltigen Flammschutzmitteln oder Phenolbildnern, Polyurethanschaumstoffe herstellen, die über ausgezeichnete flammwidrige Eigenschaften verfügen, die denen der bekannten Arylphosphate gleichkommen, und die sich zudem durch niedrige Foggingwerte und eine geringe Kernverfärbung auszeichnen.

Gegenstand der Erfindung ist ein flammwidriger Polyurethanschaumstoff, dadurch gekennzeichnet, dass er als Flammschutzmittel mindestens einen phosphorhaltigen Propionsäureester der Formel (I)

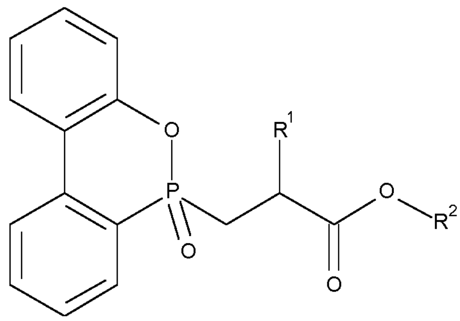

(I),

worin

$R^1$ für Wasserstoff oder einen geradkettigen oder verzweigten Alkylrest mit 1 bis 4 Kohlenstoffatomen steht, und

$R^2$ für einen geradkettigen oder verzweigten Alkylrest mit 1 bis 10 Kohlenstoffatomen oder für einen Cycloalkylrest mit 3 bis 10 Kohlenstoffatomen steht,

enthält mit einem Raumgewicht von 15-40 kg/$m^3$. Bevorzugt stehen $R^1$ für Wasserstoff und $R^2$ für einen geradkettigen oder verzweigten Alkylrest mit 1 bis 4 Kohlenstoffatomen oder für einen Cycloalkylrest mit 5 bis 6Kohlenstoffatomen.

Besonders bevorzugt stehen $R^1$ für Wasserstoff und $R^2$ für Ethyl oder für n-Butyl.

Unter einem geradkettigen oder verzweigten Alkylrest mit 1 bis 4 Kohlenstoffatomen in der Bedeutung von $R^1$ ist beispielsweise ein Methyl-, Ethyl-, Propyl- oder Butylrest zu verstehen, wobei sämtliche mögliche Isomere der genannten Reste umfasst sein sollen .

Unter einem geradkettigen oder verzweigten Alkylrest mit 1 bis 10 Kohlenstoffatomen in der Bedeutung von $R^2$ ist beispielsweise ein Methyl-, Ethyl-, Propyl-, Butyl-, Pentyl-, Hexyl-, Heptyl-, Octyl-, Nonyl- oder Decylrest zu verstehen, wobei sämtliche mögliche Isomere der genannten Reste umfasst sein sollen.

Unter einem Cycloalkylrest mit 3 bis 10 Kohlenstoffatomen in der Bedeutung von $R^2$ ist beispielsweise ein Cyclopropyl-, Cyclobutyl-, Cyclopentyl- oder Cyclohexylrest zu verstehen.

Der erfindungsgemäße flammwidrige Polyurethanschaumstoff kann einen oder mehrere Propionsäureester der Formel (I) in beliebiger Mischung enthalten.

Der Gehalt an phosphorhaltigen Propionsäureestern der Formel (I) in dem flammwidrigen Polyurethanschaumstoff beträgt bevorzugt 0,1 - 25 Gew.-% bezogen auf den gesamten Schaumstoff. Besonders bevorzugt enthält der Schaumstoff 1,0 - 16 Gew.-% an phosphorhaltigen Propionsäureestern der Formel (I) bezogen auf 100 Gew.-% Schaumstoff.

Bevorzugt sind die im erfindungsgemäßen Schaumstoff enthaltenen, phosphorhaltigen Propionsäureester der Formel (I) bei der Verarbeitungstemperatur Flüssigkeiten. Unter der Verarbeitungstemperatur wird hierbei die Temperatur

verstanden, bei der die Polyurethanrohstoffe den Dosier- und Mischaggregaten der Verschäumanlagen zugeführt werden. In der Regel werden hier in Abhängigkeit der Viskositäten der Komponenten und Auslegung der Dosieraggregate Temperaturen zwischen 20 und 80 °C gewählt.

Vorzugsweise haben die phosphorhaltigen Propionsäureester der Formel (I) bei 23 °C ein Viskosität zwischen 10 mPas und 10 000 mPas.

Die im Polyurethanschaumstoff enthaltenen phosphorhaltigen Propionsäureester der Formel (I) und Methoden zu ihrer Herstellung sind beispielsweise aus DE 26 46 218 A1 bekannt.

Die phosphorhaltigen Propionsäureester der Formel (I) lassen sich beispielsweise durch Umsetzung von 9,10-Dihydro-9-oxa-10-phosphaphenanthren-10-oxid mit Acrylsäureestern bei einer Temperatur von 35 bis 65 °C und Normaldruck herstellen.

Die Ausgangsstoffe 9,10-Dihydro-9-oxa-10-phosphaphenanthren-10-oxid und Acrylsäureester sind kommerziell erhältlich.

Bei dem Polyurethanschaumstoff handelt es sich um einen Schaumstoff auf Isocyanatbasis, der vorwiegend Urethan- und/oder Isocyanurat- und/oder Allophanat- und/oder Uretdion- und/oder Harnstoff- und/oder Carbodiimidgruppen aufweist. Die Herstellung von Schaumstoffen auf Isocyanatbasis ist an sich bekannt und z. B. in DE-OS 16 94 142 (= GB 1 211 405), DE-OS 16 94 215 (= US 3,580,890) und DE-OS 17 20 768 (= US 3,620,986) beschrieben.

Polyurethanschaumstoffe werden grob unterschieden in weiche und harte Schaumstoffe. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Der erfindungsgemäße Polyurethanschaumstoff weist ein Raumgewicht von 15 - 40 $kg/m^3$ auf. Bevorzugt enthalten die erfindungsgemäßen Polyurethanschaumstoffe keine halogenhaltigen Flammschutzmittel. Bevorzugt enthalten die erfindungsgemäßen Polyurethanschaumstoffe keine keine Arylphosphat-haltigen Flammschutzmittel.

Die erfindungsgemäßen Polyurethanschaumstoffe zeichnen sich durch eine geringe Kernverfärbung aus. Für Vergleichszwecke bietet sich die oben genannte Mikrowellenmethode gemäß US 4,131,660 an, in der eine Schaumstoffprobe zunächst durch Mikrowellenbestrahlung erhitzt wird und dann die dadurch verursachte Färbung colorimetrisch bestimmt wird. Der Farbunterschied dE gegenüber einer reinweißen Referenz gilt als Maß für die unter Produktionsbedingungen zu erwartende Kernverfärbung. Bei den erfindungsgemäßen Polyurethanschaumstoffen beträgt die Zunahme der Kernverfärbung, ausgedrückt als Farbunterschied dE gemäß der Mikrowellenmethode, bevorzugt nicht mehr als 50 % bezogen auf den dE eines entsprechenden Schaumstoffs, der keine erfindungsgemäßen Flammschutzmittel enthält.

Weiterer Gegenstand der vorliegenden Erfindung ist die Verwendung von mindestens einem phosphorhaltigen Propionsäureester der Formel (I), mit der oben angegebenen allgemeinen und bevorzugten Bedeutung, zur Herstellung von flammwidrigem Polyurethanschaum.

Überraschenderweise können die phosphorhaltigen Propionsäureester der Formel (I) sowohl bei der Herstellung von Polyether-basierten Schaumstoffen als auch bei der Herstellung von Polyesterbasierten Schaumstoffen eingesetzt werden.

Die phosphorhaltigen Propionsäureester der Formel (I) sind bei den Verarbeitungstemperaturen der Polyurethanrohstoffe flüssig, was sie leicht handhabbar und verarbeitbar macht.

Weiterer Gegenstand der vorliegenden Erfindung ist ein Verfahren zur Herstellung von flammwidrigen Polyurethanschaumstoffen mit geringer Kernverfärbung durch Umsetzung von mindestens einer organischen Polyisocyanatkomponente (i), die mindestens zwei Isocyanatgruppen enthält, mit mindestens einer Polyolkomponente (ii), die mindestens zwei gegenüber Isocyanaten reaktionsfähige Wasserstoffatome enthält, gegebenenfalls in Gegenwart von üblichen Treibmitteln, Stabilisatoren, Aktivatoren und/oder weiteren üblichen Hilfs- und Zusatzstoffen bei einer Temperatur von 20 bis 80 °C, dadurch gekennzeichnet, dass als Flammschutzmittel mindestens ein phosphorhaltiger Propionsäureester der Formel (I), mit der oben angegebenen allgemeinen und bevorzugten Bedeutung, in einer Menge von 0,1 bis 50 Teilen bezogen auf 100 Teile Polyolkomponente (ii) eingesetzt wird.

Bei dem erfindungsgemäßen Polyurethanschaumstoff handelt es sich um einen Schaumstoff auf Isocyanatbasis, der vorwiegend Urethan- und/oder Isocyanurat- und/oder Allophanat- und/oder Uretdion- und/oder Harnstoff-

und/oder Carbodiimidgruppen aufweist. Die Herstellung von Schaumstoffen auf Isocyanatbasis ist an sich bekannt und z. B. in DE-OS 16 94 142 (= GB 1 211 405), DE-OS 16 94 215 (= US 3,580,890) und DE-OS 17 20 768 (= US 3,620,986) beschrieben.

Für die Herstellung der erfindungsgemäßen PU-Schaumstoffe auf Isocyanatbasis werden allgemein folgende Ausgangskomponenten eingesetzt:

1. Organische Polyisocyanatkomponenten (i) aus der Reihe der aliphatischen, cycloaliphatischen, araliphatischen, aromatischen und heterocyclische Polyisocyanate (vgl. z.B. DE-OS 27 32 292), beispielsweise solche der Formel Q(NCO)n, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

2. Polyolkomponenten (ii), die mindestens zwei gegenüber Isocyanaten reaktionsfähigen Wasserstoffatome enthalten, mit einem Molekulargewicht von 400 bis 8.000 g/mol. Hierunter versteht man neben Aminogruppen, Thiogruppen oder Carboxylgruppen aufweisende Verbindungen, vorzugsweise Hydroxylgruppen aufweisende Verbindungen (Polyole), insbesondere 2 bis 8 Hydroxylgruppen aufweisende Polyole. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich insbesondere um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 (= US 4,263,408) und in der EP 1 555 275 A2 (= US 2005 159 500) beschrieben werden. Die mindestens zwei Hydroxylgruppen aufweisenden Polyether und Polyester sind erfindungsgemäß bevorzugt.

3. Gegebenenfalls Kettenverlängerungsmittel und/oder Vernetzer. Dieses sind Verbindungen mit mindestens zwei gegenüber Isocyanaten reaktionsfähigen Wasserstoffatomen und einem Molekulargewicht von 32 bis 399 geeignet. Auch hierunter versteht man Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen. Diese Verbindungen weisen in der Regel 2 bis 8, vorzugsweise 2 bis 4 gegenüber Isocyanaten reaktionsfähige Wasserstoffatome auf. Beispiele hierfür werden ebenfalls in der DE-OS 28 32 253 (= US 4,263,408) beschrieben.

4. Wasser und/oder leicht flüchtige Substanzen als Treibmittel, z. B. n-Pentan, i-Pentan, Cyclopentan, halogenhaltige Alkane, wie Trichlormethan, Methylenchlorid oder Chlorfluoralkane, Gase, wie $CO_2$ und andere. Auch eine Mischung mehrerer Treibmittel kann verwendet werden.

5. Gegebenenfalls können Hilfs- und Zusatzmittel mitverwendet werden, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292 = US 4,248,930 Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein. Einzelheiten über Verwendungs- und Wirkungsweise dieser Hilfs- und Zusatzmittel sind im Kunststoff-Handbuch, Band VII, Carl Hanser Verlag, München, 1993, auf den Seiten 104 bis 123 beschrieben.

Als weitere Flammschutzmittel können neben den phosphorhaltigen Propionsäureestern der Formel (I) in dem erfindungsgemäßen Polyurethanschaumstoff gegebenenfalls ein oder mehrere Verbindungen aus der Reihe

a) organische Phosphorverbindungen, wie beispielsweise Triethylphosphat, aliphatische Bisphosphate, Dimethylmethanphosphonat, Diethylethanphosphonat, Dimethylpropanphosphonat, oligomere Phosphate oder Phosphonate, Hydroxylgruppen-haltige Phosphorverbindungen, 5,5-Dimethyl-1,3,2-dioxaphosphorinan-2-oxid-Derivate, 6H-Dibenz[c,e] [1,2]oxaphosphorin-6-oxid-Derivate, wie z. B. $N^1$,$N^2$-bis(6-oxido-6H-dibenz[c,e][1,2] oxaphosphorin-6-yl)-1,2-ethandiamin,

b) salzartige Phosphorverbindungen, wie beispielsweise Ammoniumphosphat, Ammoniumpolyphosphat, Melaminphosphat, Melaminpolyphosphat, Metall-Melamin-Polyphosphate, Metallsalze von Dialkylphosphinsäuren, Metallsalze von Alkanphosphonsäuren,

c) Stickstoffverbindungen, wie beispielsweise Melamin, Melamincyanurat, und

d) anorganische Flammschutzmittel, wie beispielsweise Aluminiumhydroxid, Boehmit, Magnesiumhydroxid, Blähgraphit oder Tonmineralien

enthalten sein.

Die erfindungsgemäßen Polyurethanschaumstoffe lassen sich also durch entsprechende, leicht dem Stand der Technik zu entnehmende Wahl der Ausgangsstoffe, insbesondere der Polyolkomponente (ii) als Hart- oder Weichschaumstoffe herstellen. Bevorzugt handelt es sich bei den erfindungsgemäßen Polyurethanschaumstoffen um Weichschaumstoffe

Die oben beschriebenen Reaktionskomponenten, ohne die einzusetzenden Isocyanate, aber einschließlich der einzusetzenden Flammschutzmittel werden vorgemischt und dann mit den Isocyanaten nach dem an sich bekannten Einstufenverfahren, dem Prepolymerverfahren oder dem Semiprepolymerverfahren zur Umsetzung gebracht. Dabei bedient man sich oft maschineller Einrichtungen, z. B. solcher, die in der US 2,764,565 beschrieben werden. Einzelheiten über Verarbeitungsvorrichtungen, die auch erfindungsgemäss in Frage kommen, werden im Kunststoff-Handbuch Band VII, Polyurethane, herausgegeben von G. Oertel, Carl Hanser Verlag München, Wien 1993, auf den Seiten 139 bis 192 beschrieben.

Erfindungsgemäß lassen sich auch kalthärtende Schaumstoffe herstellen (z.B. gemäß GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von flammwidrigen Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen geschäumten Formartikel finden z. B. folgende Anwendung: Möbelpolsterungen, Textileinlagen, Matratzen, Sitze, bevorzugt Flugzeugsitze oder Automobilsitze, Armlehnen, Bauelemente, Fahrzeuginneneinrichtungen sowie Sitz- und Armaturverkleidungen.

Anhand der nachfolgenden Beispiele wird die Erfindung näher erläutert, ohne dass dadurch eine Einschränkung der Erfindung bewirkt werden soll.

## Beispiele

### Herstellung eines phosphorhaltigen Propionsäureester der Formel (I)

6-Oxo-6H-dibenz[c,e][1,2]oxaphosphorin-6-propionsäure-n-butylester (Flammschutzmittel F3) wurde gemäß dem Verfahren aus Organic Letters 2005, Vol. 7, No. 5, (Supplementary Information S8) durch Umsetzung von 6H-dibenz[c,e][1,2]oxaphosphorin-6-oxid mit n-Butylacrylat hergestellt. Es wurde eine farblose Flüssigkeit mit einer Viskosität von 6500 mPas bei 23 °C erhalten.

### Herstellung von Polyurethanweichschaumstoffen

Die angegebenen Teile beziehen sich jeweils auf das Gewicht.

**Tabelle 1: Verwendete Materialien.**

| Komponente | Funktion | Beschreibung |
|---|---|---|
| A1 | Polyol | Arcol® 1105 (Bayer MaterialScience), Polyetherpolyol mit OHZ 56 mg KOH/g |
| A2 | Polyol | Desmophen® 2200 B (Bayer MaterialScience), Polyesterpolyol mit OHZ 60 mg KOH/g |

(fortgesetzt)

| Komponente | Funktion | Beschreibung |
|---|---|---|
| B | Treibmittel | Wasser |
| C1 | Katalysator | Addocat® 108 (Rhein Chemie), 70 %ige Lösung von Bis(2-dimethylaminoethyl)ether in Dipropylenglykol |
| C2 | Katalysator | Addocat® SO (Rhein Chemie), Zinn-(II)-2-ethylhexanoat |
| D1 | Katalysator | Niax® A-30(Momentive), Amin |
| D2 | Katalysator | Addocat® 117 (Rhein Chemie), Tertiäres Amin |
| E1 | Stabilisator | Tegostab® B 8232 (Degussa), Siliconstabilisator |
| E2 | Stabilisator | Tegostab® B 8324 (Degussa), Siliconstabilisator |
| F1 | Flammschutzmittel | Tris(dichlorisopropyl)phosphat, Chloralkylphosphat |
| F2 | Flammschutzmittel | Disflamoll® TP LXS 51092, triphenylphosphathaltige Arylphosphatmischung, kommerzielles Produkt der Lanxess Deutschland GmbH |
| F3 | Flammschutzmittel | 6-Oxo-6H-dibenz[c,e][1,2]oxaphosphorin-6-propionsäure-n-butylester, phosphorhaltiger Propionsäureester der Formel I mit R1 = H und R2 = n-Butyl |
| G1 | Diisocyanat | Desmodur® T 80 (Bayer MaterialScience), Toluylendiisocyanat, Isomerenmischung |
| G2 | Diisocyanat | Desmodur® T 65 (Bayer MaterialScience), Toluylendiisocyanat, Isomerenmischung |

Die in Tabelle 1 spezifizierten Komponenten mit Ausnahme des Diisocyanats (Komponente G) wurden je nach Schaumtyp in den in Tabellen 2 bis 4 angegebenen Massenverhältnissen zu einer homogenen Mischung verrührt. Dann wurden die Diisocyanate (Komponente G) zugefügt und kurz intensiv untergerührt. Nach einer Startzeit von 12 bis 15 Sekunden und einer Steigzeit von 128 bis 166 Sekunden wurden Polyurethanweichschaumstoffe mit den angegebenen Raumgewichten kg/m3 erhalten.

**Bestimmung der Flammschutzwirkung**

Die Polyurethanweichschaumstoffe wurden nach den Vorgaben des Federal Motor Vehicle Safety Standards FMVSS-302 getestet ("MVSS 302-Test"). Dabei wurden in einer horizontalen Halterung befestigte Schaumstoff-Probenkörper der Maße 210 mm x 95 mm x 15 mm (L x B x H) mittig an der kurzen Kante für 15 Sekunden mit einer 40 mm hohen Gasbrennerflamme entzündet und nach Entfernung der Zündflamme die Flammenausbreitung beobachtet. Je nachdem, ob und wie weit der Probenkörper weiterbrannte, wurde er den Brandklassen SE (selbstverlöschend, weniger als 38 mm der Probe angebrannt), SE/NBR (selbstverlöschend innerhalb von 60 Sekunden/keine Angabe der Brennrate), SE/B (selbstverlöschend/Brennrate messbar), BR (brennt bis zum Probenende, Brennrate messbar) und RB (schnell brennend, Brennrate nicht messbar) zugeordnet. Zum Bestehen des Test ist mindestens eine Klassifizierung BR erforderlich. Die Brandversuche wurden für jedes Beispiel fünfmal durchgeführt.

Zum Vergleich der Wirksamkeit verschiedener Flammschutzmittel wurde entweder bestimmt, ob der MVSS 302-Test bei der angegebenen Einsatzmenge an Flammschutzmittel bestanden wurde (Tabelle 3) oder es wurden Schaumstoffe mit unterschiedlichen Mengen an Flammschutzmittel hergestellt und für jedes Flammschutzmittel diejenige Menge in Gewichtsteilen pro 100 Gewichtsteile Polyol (php) ermittelt, die mindestens für eine Klassifizierung BR bzw. SE erforderlich ist (Tabelle 2 in den Zeilen "Wirksamkeit BR" bzw. "Wirksamkeit SE").

**Bestimmung des Foggings**

Das Foggingverhalten der Polyurethanweichschaumstoffe wurde gemäß DIN 75201 B untersucht. Dabei wurden zylindrische Schaumstoff-Probenkörper der Maße 80 mm x 10 mm (∅ x H) für 16 Stunden auf 100 °C erhitzt und die während dieser Zeit an einer auf 21 °C gekühlten, oberhalb der Probenkörper positionierten Aluminiumfolie niedergeschlagenen Kondensatmengen ausgewogen. Die gemessenen Kondensatmengen sind in Tabelle 2 wiedergegeben.

**Bestimmung der Kernverfärbung**

Die Komponenten wurden gemischt und dann in eine 20 x 20 x 14 cm Papierform gegossen. 5 Minuten nach Beendigung des Schäumvorganges (die Temperatur im Kern des Schaumes erreicht ca. 135 °C) wurde der Schaum in einen Mikrowellenofen (Mars 5, CEM) für 4 Minuten bei 300 Watt bestrahlt. Dann wurde der Schaum herausgenommen (Temperatur im Schaum ca. 160 °C) und über Nacht abkühlen gelassen. Anschließend wurde der Schaum halbiert und auf Scorch untersucht. Hierzu wurde der Schaum mittels einem Colorimeter (CR-400/410, Konica Minolta) analysiert. Das Colorimeter bestimmt die drei Farbcharakteristiken Helligkeit (L), Rot- und Grünton (a) sowie Gelb- und Blauton (b) des untersuchten Schaumes. Im Vergleich mit einer reinweißen Referenz wurden die Differenzen dL, da und db ermittelt. Aus diesen Daten wurde dann der Farbunterschied (dE) des untersuchten Schaumes gegenüber der Referenz nach folgender Formel berechnet:

$$dE = (dL^2 + da^2 + db^2)^{0,5}.$$

Die Zunahme Z der Kernverfärbung eines Flammschutzmittel-haltigen Schaumstoffs ist ein Maß für die Beeinflussung der Kernverfärbung durch das Flammschutzmittel und entspricht der Formel

$$Z = [dE(mit) - dE(ohne)] / dE(ohne) \cdot 100\ \%$$

(dE(mit) = Farbunterschied des Schaumstoffs mit Flammschutzmittel, dE(ohne) = Farbunterschied des Schaumstoffs ohne Flammschutzmittel).

**Herstellung von Polyether-Weichschaumstoffen (Automobil)**

**Tabelle 2: Zusammensetzung (Teile) und Prüfergebnisse des erfindungsgemäßen Beispiels B1 und der nicht erfindungsgemäßen Vergleichsbeispiele V1 bis V3.**

| Beispiel | V1 | V2 | V3 | B1 |
|---|---|---|---|---|
| A1 | 100 | 100 | 100 | 100 |
| B | 3,0 | 3,0 | 3,0 | 3,0 |
| C1 | 0,08 | 0,08 | 0,08 | 0,08 |
| C2 | 0,16 | 0,16 | 0,16 | 0,16 |
| E1 | 0,80 | 0,80 | 0,80 | 0,80 |
| F1 | | 6 | | |
| F2 | | | 6 | |
| F3 | | | | 6 |
| G1 | 40,9 | 40,9 | 40,9 | 40,9 |
| Raumgewicht [kg/m$^3$] | 32,5 | 33,3 | 33,5 | 33,2 |
| Fogging [mg] | 0,3 | 0,6 | 0,8 | 0,3 |
| Wirksamkeit BR [php] | n.a. | 4 | 9 | 8 |
| Wirksamkeit SE [php] | n.a. | 5 | 10 | 10 |

**Ergebnisse**

In Abwesenheit eines Flammschutzmittels (Vergleichsbeispiel V1, Tabelle 2) brennt der Polyurethanweichschaumstoff rasch ab und besteht damit den MVSS 302-Test nicht. Er zeigt aber einen sehr niedrigen Foggingwert. Ein Schaumstoff mit Tris(dichlorisopropyl)phosphat (Vergleichsbeispiel V2) ist flammwidrig und besteht den MVSS 302-Test bei einer Einsatzmenge von 4 php. Allerdings zeigt der Schaumstoff ein erhöhtes Fogging, wenngleich der von der

Automobilindustrie geforderte Foggingwert von maximal 1 mg Kondensat einhalten werden kann. Tris(di-chlorisopropyl)phosphat bringt aber die oben beschriebenen Nachteile eines halogenhaltigen Flammschutzmittels mit. Mit der Verwendung des halogenfreien Arylphosphats Disflamoll® TP LXS 51092 (Vergleichsbeispiel V3) wird dieses Problem umgangen, allerdings ist der Foggingwert relativ hoch. Außerdem enthält Disflamoll® TP LXS 51092 unerwünschte Phenolbildner.

Das Beispiel B1 zeigt, dass der erfindungsgemäße Polyurethanweichschaumstoff gemäß MVSS 302-Test flammwidrig ist und sich durch einen sehr niedrigen Foggingwert auszeichnet, ohne dass dafür halogenhaltige Flammschutzmittel oder Phenolbildner erforderlich wären.

## Herstellung von Polyester-Weichschaumstoffen

**Tabelle 3: Zusammensetzung (Teile) und Prüfergebnisse des erfindungsgemäßen Beispiels B2 und der nicht erfindungsgemäßen Vergleichsbeispiele V4 bis V6.**

| Beispiel | V4 | V5 | V6 | B2 |
|---|---|---|---|---|
| A2 | 100 | 100 | 100 | 100 |
| B | 4,5 | 4,5 | 4,5 | 4,5 |
| D1 | 0,25 | 0,25 | 0,25 | 0,25 |
| D2 | 0,25 | 0,25 | 0,25 | 0,25 |
| E2 | 1,0 | 1,0 | 1,0 | 1,0 |
| F1 | | 6 | | |
| F2 | | | 6 | |
| F3 | | | | 6 |
| G1 | 24,1 | 24,1 | 24,1 | 24,1 |
| G2 | 24,1 | 24,1 | 24,1 | 24,1 |
| Raumgewicht [kg/m$^3$] | 31,8 | 33,7 | 31,9 | 32,5 |
| MVSS 302-Beurteilung | nicht bestanden | bestanden | bestanden | bestanden |

**Ergebnisse**

In Abwesenheit eines Flammschutzmittels (Vergleichsbeispiel V4, Tabelle 3) brennt der Polyurethanweichschaumstoff rasch ab und besteht damit den MVSS 302-Test nicht. Alle Schaumstoffe mit einem Flammschutzmittel bestehen bei einer Zugabe von 6 Teilen den MVSS 302.

Das Beispiel B2 zeigt, daß der erfindungsgemäße Polyurethanweichschaumstoff die Flammschutzanforderungen gemäß MVSS 302-Test wie die Vergleichsbeispiele erfüllt.

## Herstellung von Polyether-Weichschaumstoffen (Möbel)

**Tabelle 4: Zusammensetzung (Teile) und Prüfergebnisse des erfindungsgemäßen Beispiels B3 und der nicht erfindungsgemäßen Vergleichsbeispiele V7 bis V9.**

| Beispiel | V7 | V8 | V9 | B3 |
|---|---|---|---|---|
| A1 | 100 | 100 | 100 | 100 |
| B | 4,5 | 4,5 | 4,5 | 4,5 |
| C1 | 0,12 | 0,12 | 0,12 | 0,12 |

(fortgesetzt)

| Beispiel | V7 | V8 | V9 | B3 |
|---|---|---|---|---|
| C2 | 0,20 | 0,20 | 0,20 | 0,20 |
| E1 | 0,8 | 0,8 | 0,8 | 0,8 |
| F1 | | 18 | | |
| F2 | | | 18 | |
| F3 | | | | 18 |
| G1 | 57,3 | 57,3 | 57,3 | 57,3 |
| Raumgewicht [kg/$m^3$] | 24,7 | 25,8 | 26,4 | 25,7? |
| Kernverfärbung [dE] | 12 | 23,5 | 16,5 | 15 |
| Zunahme Kernverfärbung [Z] | 0% | 96% | 38 % | 25% |

**Ergebnisse**

In Abwesenheit eines Flammschutzmittels (Vergleichsbeispiel V7, Tabelle 4) tritt nur eine geringe Kernverfärbung auf. Bei Zugabe des Flammschutzmittels Tris(dichlorisopropyl)phosphat weist der Schaum eine stark erhöhte Kernverfärbung auf (Vergleichsbeispiel V8). Das Vergleichsbeispiel V 9 sowie der erfindungsgemäße Polyurethanweichschaum (Beispiel B 3) zeigen dagegen nur eine geringe Erhöhung der Kernverfärbung gegenüber dem Schaum ohne Flammschutzmittel.

Die angeführten Beispiele belegen, dass die erfindungsgemäßen Schaumstoffe unter Verwendung von einfach zu verarbeitenden, flüssigen phosphorhaltigen Propionsäureestern der Formel I flammwidrig ausgerüstet werden können. Diese Flammschutzmittel sind sowohl mit Polyether-Polyolen als auch mit Polyester-Polyolen gut verarbeitbar (Tabellen 2, 3 und 4). Ihre Wirksamkeit in Polyurethanschaumstoffen entspricht derjenigen von Arylphosphaten (Tabellen 2 und 3). Der Einsatz von halogenhaltigen Flammschutzmitteln oder Phenolbildnern ist nicht erforderlich. Die Schaumstoffe zeichnen sich durch niedrige Foggingwerte (Tabelle 2) und eine geringe Kernverfärbung (Tabelle 4) aus.

**Patentansprüche**

1. Flammwidriger Polyurethanschaumstoff, **dadurch gekennzeichnet, dass** er als Flammschutzmittel mindestens einen phosphorhaltigen Propionsäureester der Formel (I)

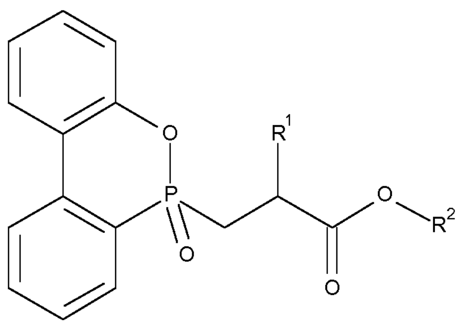

(I),

worin

$R^1$ für Wasserstoff oder einen geradkettigen oder verzweigten Alkylrest mit 1 bis 4 Kohlenstoffatomen steht, und $R^2$ für einen geradkettigen oder verzweigten Alkylrest mit 1 bis 10 Kohlenstoffatomen oder für einen Cycloalkylrest mit 3 bis 10 Kohlenstoffatomen steht,
enthält mit einem Raumgewicht von 15 - 40 kg/$m^3$.

2. Polyurethanschaumstoff gemäß Anspruch 1, **dadurch gekennzeichnet, dass** $R^1$ für Wasserstoff und $R^2$ für einen geradkettigen oder verzweigten Alkylrest mit 1 bis 4 Kohlenstoffatomen oder für einen Cycloalkylrest mit 5 bis 6 Kohlenstoffatomen steht.

3. Polyurethanschaumstoff gemäß Anspruch 1 oder 2, **dadurch gekennzeichnet, dass** $R^1$ für Wasserstoff und $R^2$ für Ethyl oder für n-Butyl steht.

4. Polyurethanschaumstoff nach mindestens einem der Ansprüche 1 bis 3, **dadurch gekennzeichnet, dass** der Gehalt an mindestens einem phosphorhaltigen Propionsäureester der Formel (I) 0,1 - 25 Gew.-% bezogen auf 100 Gew.-% Polyurethanschaumstoff beträgt.

5. Polyurethanschaumstoff nach mindestens einem der Ansprüche 1 bis 4, **dadurch gekennzeichnet, dass** es sich bei dem phosphorhaltigen Propionsäureester der Formel (I) um eine im Temperaturbereich zwischen 20 °C und 80 °C flüssige Verbindung handelt.

6. Polyurethanschaumstoff nach mindestens einem der Ansprüche 1 bis 5, **dadurch gekennzeichnet, dass** der phosphorhaltige Propionsäureester der Formel (I) bei 23 °C eine Viskosität zwischen 10 mPas und 10 000 mPas aufweist.

7. Polyurethanschaumstoff nach mindestens einem der Ansprüche 1 bis 6, **dadurch gekennzeichnet, dass** es sich um einen Polyurethanweichschaumstoff handelt.

8. Polyurethanschaumstoff nach mindestens einem der Ansprüche 1 bis 7, **dadurch gekennzeichnet, dass** er außer mindestens einem Propionsäureester der Formel (I) mindestens ein weiteres, von den Propionsäureestern der Formel (I) verschiedenes Flammschutzmittel enthält.

9. Polyurethanschaumstoff nach mindestens einem der Ansprüche 1 bis 8, **dadurch gekennzeichnet, dass** er keine Arylphosphat-haltigen Flammschutzmittel enthält.

10. Verwendung von mindestens einem phosphorhaltigen Propionsäureester der Formel (I)

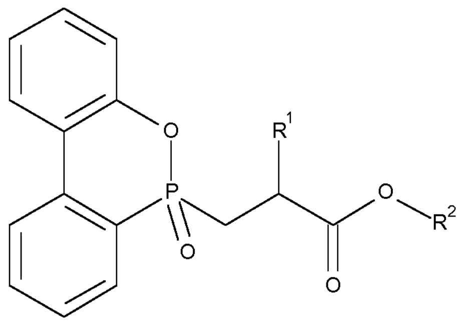

(I),

worin

$R^1$ für Wasserstoff oder einen geradkettigen oder verzweigten Alkylrest mit 1 bis 4 Kohlenstoffatomen steht, und $R^2$ für einen geradkettigen oder verzweigten Alkylrest mit 1 bis 10 Kohlenstoffatomen oder für einen Cycloalkylrest mit 3 bis 10 Kohlenstoffatomen steht,
als Flammschutzmittel bei der Herstellung von flammwidrigen Polyurethanweichschaumstoffen.

11. Verfahren zur Herstellung eines flammwidrigen Polyurethanschaumstoffs durch Umsetzung von mindestens einer organischen Polyisocyanatkomponente die mindestens zwei Isocyanatgruppen enthält, mit mindestens einer Polyolkomponente die mindestens zwei gegenüber Isocyanaten reaktionsfähige Wasserstoffatome enthält, gegebenenfalls in Gegenwart von üblichen Treibmitteln, Stabilisatoren, Aktivatoren und/oder weiteren üblichen Hilfs- und Zusatzstoffen bei einer Temperatur von 20 bis 80 °C, **dadurch gekennzeichnet, dass** die Umsetzung in Gegenwart von mindestens einem phosphorhaltigen Propionsäureester der Formel (I)

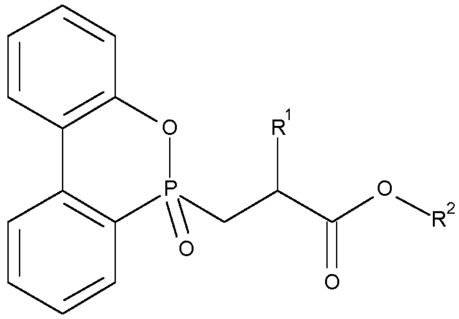

worin

$R^1$ für Wasserstoff oder einen geradkettigen oder verzweigten Alkylrest mit 1 bis 4 Kohlenstoffatomen steht, und $R^2$ für einen geradkettigen oder verzweigten Alkylrest mit 1 bis 10 Kohlenstoffatomen oder für einen Cycloalkylrest mit 3 bis 10 Kohlenstoffatomen steht,
als Flammschutzmittel durchgeführt wird.

**12.** Verfahren gemäß Anspruch 11, **dadurch gekennzeichnet, dass** der Propionsäureester der Formel (I) in einer Menge von 0,1 bis 50 Teilen bezogen auf 100 Teile Polyolkomponente eingesetzt wird.

**13.** Verfahren zur Verringerung von Scorch und/oder Fogging in oder aus flammwidrigen Polyurethanschaumstoffen, **dadurch gekennzeichnet, dass** bei der Herstellung des Polyurethanschaumstoffs mindestens ein phosphorhaltiger Propionsäureester der Formel (I)

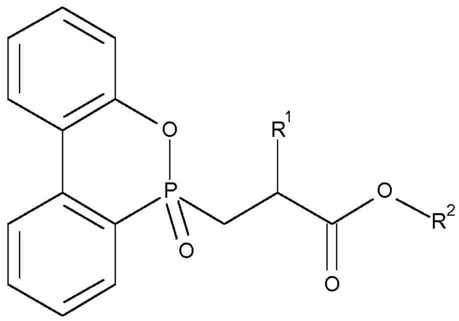

worin

$R^1$ für Wasserstoff oder einen geradkettigen oder verzweigten Alkylrest mit 1 bis 4 Kohlenstoffatomen steht, und $R^2$ für einen geradkettigen oder verzweigten Alkylrest mit 1 bis 10 Kohlenstoffatomen oder für einen Cycloalkylrest mit 3 bis 10 Kohlenstoffatomen steht,
als Flammschutzmittel eingesetzt wird.

**14.** Verfahren zur Verringerung der Kernverfärbung in flammwidrigen Polyurethanschaumstoffen, **dadurch gekennzeichnet, dass** bei der Herstellung des Polyurethanschaumstoffs mindestens ein phosphorhaltiger Propionsäureester der Formel (I)

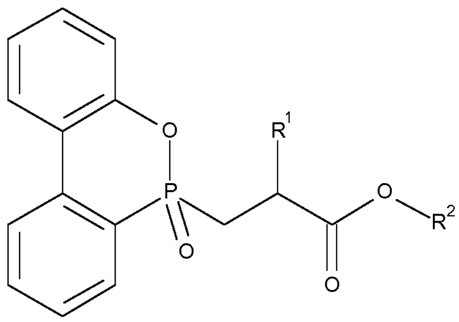

worin

$R^1$ für Wasserstoff oder einen geradkettigen oder verzweigten Alkylrest mit 1 bis 4 Kohlenstoffatomen steht, und $R^2$ für einen geradkettigen oder verzweigten Alkylrest mit 1 bis 10 Kohlenstoffatomen oder für einen Cycloalkylrest mit 3 bis 10 Kohlenstoffatomen steht,
als Flammschutzmittel eingesetzt wird.

**15.** Geschäumte Formartikel, insbesondere Möbelpolsterungen, Textileinlagen, Matratzen, Sitze, Armlehnen, Bauelemente, Fahrzeuginneneinrichtungen sowie Sitz- und Armaturverkleidungen enthaltend einen flammwidrigen Polyurethanschaum gemäß mindestens einem der Ansprüche 1 bis 9.

## Claims

**1.** Flame-retarded polyurethane foam, **characterized in that** by way of flame retardation it contains at least one phosphorus-containing propionic ester of formula (I)

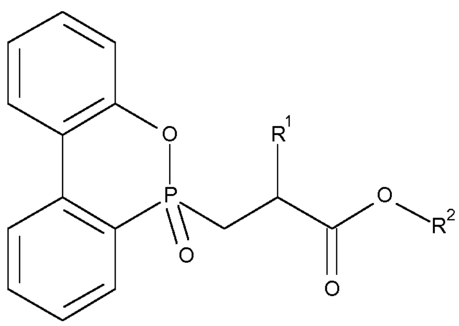

(I),

where

$R^1$ represents hydrogen or a straight-chain or branched alkyl moiety of 1 to 4 carbon atoms, and
$R^2$ represents a straight-chain or branched alkyl moiety of 1 to 10 carbon atoms or a cycloalkyl moiety of 3 to 10 carbon atoms,
having a density of 15-40 Kg/$m^3$.

**2.** Polyurethane foam according to Claim 1, **characterized in that** $R^1$ represents hydrogen and $R^2$ represents a straight-chain or branched alkyl moiety of 1 to 4 carbon atoms or a cycloalkyl moiety of 5 to 6 carbon atoms.

**3.** Polyurethane foam according to Claim 1 or 2, **characterized in that** $R^1$ represents hydrogen and $R^2$ represents ethyl or n-butyl.

**4.** Polyurethane foam according to at least one of Claims 1 to 3, **characterized in that** the content of at least one phosphorus-containing propionic ester of formula (I) is 0.1-25 wt%, based on 100 wt% of polyurethane foam.

5. Polyurethane foam according to at least one of Claims 1 to 4, **characterized in that** the phosphorus-containing propionic ester of formula (I) is a compound which is liquid in the temperature range between 20°C and 80°C.

6. Polyurethane foam according to at least one of Claims 1 to 5, **characterized in that** the phosphorus-containing propionic ester of formula (I) has a viscosity between 10 mPas and 10 000 mPas at 23°C.

7. Polyurethane foam according to at least one of Claims 1 to 6, **characterized in that** it is a flexible polyurethane foam.

8. Polyurethane foam according to at least one of Claims 1 to 7, **characterized in that** aside from at least one propionic ester of formula (I) it contains at least one further flame retardant other than the propionic esters of formula (I).

9. Polyurethane foam according to at least one of Claims 1 to 8, **characterized in that** it does not contain any flame retardant comprising aryl phosphate.

10. Use of at least one phosphorus-containing propionic ester of formula (I)

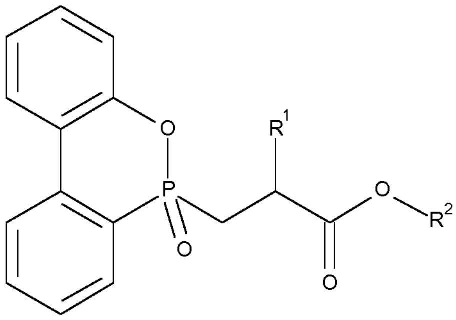

(I),

where

$R^1$ represents hydrogen or a straight-chain or branched alkyl moiety of 1 to 4 carbon atoms, and
$R^2$ represents a straight-chain or branched alkyl moiety of 1 to 10 carbon atoms or a cycloalkyl moiety of 3 to 10 carbon atoms,
as flame retardant in the manufacture of flame-retardant flexible polyurethane foams.

11. Process for producing a flame-retarded polyurethane foam by reacting at least one organic polyisocyanate component containing at least two isocyanate groups with at least one polyol component containing at least two isocyanate-reactive hydrogen atoms, optionally in the presence of customary blowing agents, stabilizers, activators and/or further customary auxiliary and added-substance materials at a temperature of 20 to 80°C, **characterized in that** the reaction is carried out in the presence of at least one phosphorus-containing propionic ester of formula (I)

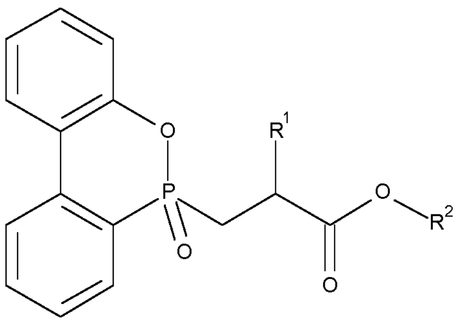

where

$R^1$ represents hydrogen or a straight-chain or branched alkyl moiety of 1 to 4 carbon atoms, and
$R^2$ represents a straight-chain or branched alkyl moiety of 1 to 10 carbon atoms or a cycloalkyl moiety of 3 to

10 carbon atoms,
as flame retardant.

**12.** Process according to Claim 11, **characterized in that** the propionic ester of formula (I) is used in an amount of 0.1 to 50 parts based on 100 parts of polyol component

**13.** Process for reducing scorch and/or fogging in or from flame-retarded polyurethane foams, **characterized in that** the polyurethane foam is manufactured using at least one phosphorus-containing propionic ester of formula (I)

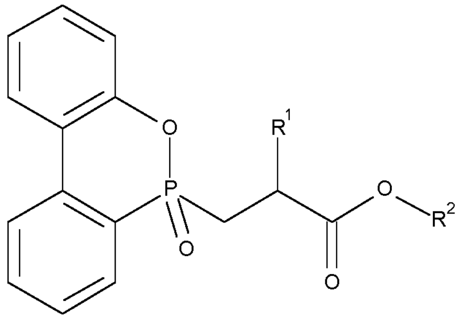

where

$R^1$ represents hydrogen or a straight-chain or branched alkyl moiety of 1 to 4 carbon atoms, and
$R^2$ represents a straight-chain or branched alkyl moiety of 1 to 10 carbon atoms or a cycloalkyl moiety of 3 to 10 carbon atoms,
as flame retardant.

**14.** Process for reducing the core discolouration in flame-retarded polyurethane foams, **characterized in that** the polyurethane foam is manufactured using at least one phosphorus-containing propionic ester of formula (I)

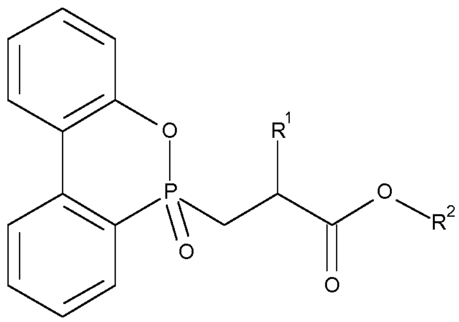

where

$R^1$ represents hydrogen or a straight-chain or branched alkyl moiety of 1 to 4 carbon atoms, and
$R^2$ represents a straight-chain or branched alkyl moiety of 1 to 10 carbon atoms or a cycloalkyl moiety of 3 to 10 carbon atoms,
as flame retardant.

**15.** Foamed mouldings, in particular furniture cushioning, textile inserts, mattresses, seats, arm rests, modules, vehicle interior components and seat and instrument panel trim comprising a flame-retarded polyurethane foam according to at least one of Claims 1 to 9.

**Revendications**

**1.** Mousse de polyuréthane ignifugée, **caractérisée en ce qu'**elle contient en tant qu'agent ignifuge au moins un ester

de l'acide propionique contenant du phosphore de formule (I)

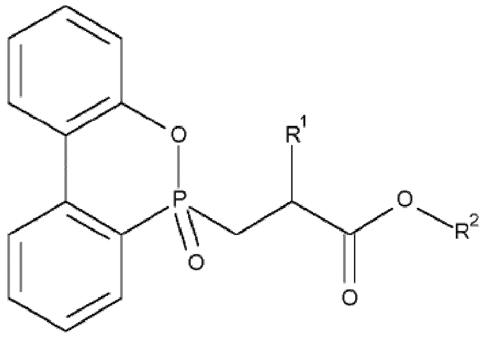

(I),

dans laquelle

$R^1$ représente l'hydrogène ou un radical alkyle linéaire ou ramifié de 1 à 4 atomes de carbone, et
$R^2$ représente un radical alkyle linéaire ou ramifié de 1 à 10 atomes de carbone, ou un radical cycloalkyle de 3 à 10 atomes de carbone,
ayant une densité apparente de 15 à 40 kg/$m^3$.

**2.** Mousse de polyuréthane selon la revendication 1, **caractérisée en ce que** $R^1$ représente l'hydrogène et $R^2$ représente un radical alkyle linéaire ou ramifié de 1 à 4 atomes de carbone, ou un radical cycloalkyle de 5 à 6 atomes de carbone.

**3.** Mousse de polyuréthane selon la revendication 1 ou 2, **caractérisée en ce que** $R^1$ représente l'hydrogène et $R^2$ représente éthyle ou n-butyle.

**4.** Mousse de polyuréthane selon au moins l'une quelconque des revendications 1 à 3, **caractérisée en ce que** la teneur en au moins un ester de l'acide propionique contenant du phosphore de formule (I) est de 0,1 à 25 % en poids, par rapport à 100 % en poids de mousse de polyuréthane.

**5.** Mousse de polyuréthane selon au moins l'une quelconque des revendications 1 à 4, **caractérisée en ce que** l'ester de l'acide propionique contenant du phosphore de formule (I) est un composé liquide dans la plage de température comprise entre 20 °C et 80 °C.

**6.** Mousse de polyuréthane selon au moins l'une quelconque des revendications 1 à 5, **caractérisée en ce que** l'ester de l'acide propionique contenant du phosphore de formule (I) présente à 23 °C une viscosité comprise entre 10 mPas et 10 000 mPas.

**7.** Mousse de polyuréthane selon au moins l'une quelconque des revendications 1 à 6, **caractérisée en ce qu'**il s'agit d'une mousse souple de polyuréthane.

**8.** Mousse de polyuréthane selon au moins l'une quelconque des revendications 1 à 7, **caractérisée en ce qu'**elle contient, outre au moins un ester de l'acide propionique de formule (I), au moins un autre agent ignifuge, différent des esters de l'acide propionique de formule (I).

**9.** Mousse de polyuréthane selon au moins l'une quelconque des revendications 1 à 8, **caractérisée en ce qu'**elle ne contient pas d'agent ignifuge contenant un arylphosphate.

**10.** Utilisation d'au moins un ester de l'acide propionique contenant du phosphore de formule (I)

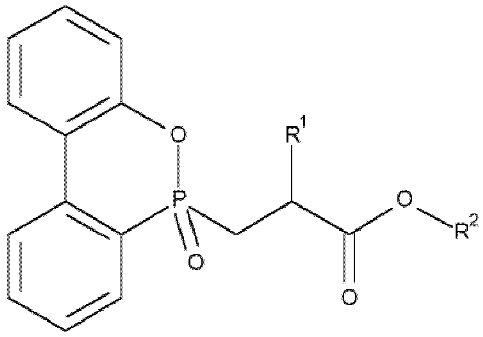

(I),

dans laquelle

$R^1$ représente l'hydrogène ou un radical alkyle linéaire ou ramifié de 1 à 4 atomes de carbone, et
$R^2$ représente un radical alkyle linéaire ou ramifié de 1 à 10 atomes de carbone, ou un radical cycloalkyle de 3 à 10 atomes de carbone,
en tant qu'agent ignifuge lors de la fabrication de mousses souples de polyuréthane ignifugées.

**11.** Procédé de fabrication d'une mousse de polyuréthane ignifugée par mise en réaction d'au moins un composant polyisocyanate organique, qui contient au moins deux groupes isocyanate, avec au moins un composant polyol, qui contient au moins deux atomes d'hydrogène réactifs avec les isocyanates, éventuellement en présence d'agents gonflants, de stabilisateurs, d'activateurs usuels et/ou d'autres adjuvants et additifs usuels, à une température de 20 à 80 °C, **caractérisé en ce que** la mise en réaction est réalisée en présence d'au moins un ester de l'acide propionique contenant du phosphore de formule (I)

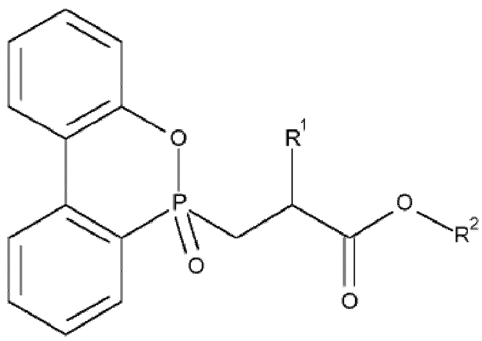

dans laquelle

$R^1$ représente l'hydrogène ou un radical alkyle linéaire ou ramifié de 1 à 4 atomes de carbone, et
$R^2$ représente un radical alkyle linéaire ou ramifié de 1 à 10 atomes de carbone, ou un radical cycloalkyle de 3 à 10 atomes de carbone,
en tant qu'agent ignifuge.

**12.** Procédé selon la revendication 11, **caractérisé en ce que** l'ester de l'acide propionique de formule (I) est utilisé en une quantité de 0,1 à 50 parties par rapport à 100 parties de composant polyol.

**13.** Procédé de réduction du grillage et/ou du voilage à l'intérieur ou à l'extérieur de mousses de polyuréthane ignifugées, **caractérisé en ce qu'**au moins un ester de l'acide propionique contenant du phosphore de formule (I)

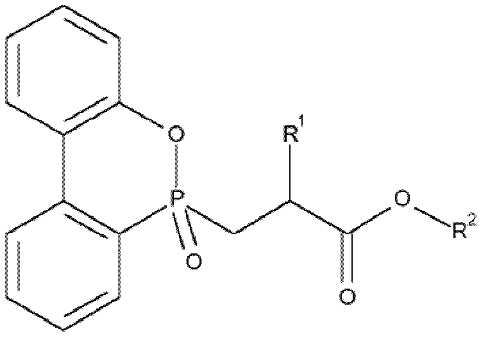

dans laquelle

$R^1$ représente l'hydrogène ou un radical alkyle linéaire ou ramifié de 1 à 4 atomes de carbone, et
$R^2$ représente un radical alkyle linéaire ou ramifié de 1 à 10 atomes de carbone, ou un radical cycloalkyle de 3 à 10 atomes de carbone,
est utilisé en tant qu'agent ignifuge lors de la fabrication de la mousse de polyuréthane.

**14.** Procédé de réduction de la coloration du noyau dans des mousses de polyuréthane ignifugées, **caractérisé en ce qu'**au moins un ester de l'acide propionique contenant du phosphore de formule (I)

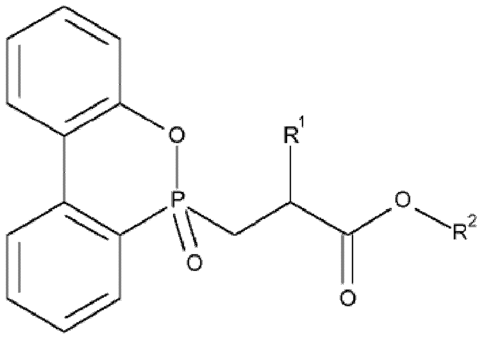

dans laquelle

$R^1$ représente l'hydrogène ou un radical alkyle linéaire ou ramifié de 1 à 4 atomes de carbone, et
$R^2$ représente un radical alkyle linéaire ou ramifié de 1 à 10 atomes de carbone, ou un radical cycloalkyle de 3 à 10 atomes de carbone,
est utilisé en tant qu'agent ignifuge lors de la fabrication de la mousse de polyuréthane.

**15.** Articles moulés moussés, notamment rembourrages de meubles, inserts textiles, matelas, sièges, accoudoirs, composants, aménagements intérieurs de véhicules, ainsi qu'habillages de sièges et de tableaux de bord, contenant une mousse de polyuréthane ignifugée selon au moins l'une quelconque des revendications 1 à 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4131660 A
- DE 102007028593
- EP 0170206 A1
- EP 0308733 B1
- DE 2646218 A1
- DE OS1694142 A
- GB 1211405 A
- DE OS1694215 A
- US 3580890 A
- DE OS1720768 A
- US 3620986 A
- DE OS2732292 A
- DE OS2832253 A
- US 4263408 A
- EP 1555275 A2
- US 2005159500 A
- US 4248930 A
- US 2764565 A
- GB PS1162517 A
- DE OS2153086 A


### In der Beschreibung aufgeführte Nicht-Patentliteratur


- **A. KÖNIG et al.** Methyl-DOPO-a new flame retardant for flexible polyurethane foam. *POLYMERS FOR ADVANCED TECHNOLOGIES,* vol. 22 (1), 5-13
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann's Encyclopedia of Industrial Chemistry Release 2005, Electronic Release. Wiley-VCH, 2005
- Kunststoff-Handbuch. Carl Hanser Verlag, 1993, vol. VII, 104-123
- Polyurethane. **G. OERTEL.** Kunststoff-Handbuch. Carl Hanser Verlag, 1993, vol. VII, 139-192
- Supplementary Information. *Verfahren aus Organic Letters,* 2005, vol. 7 (5), 8